Europäisches Patentamt

European Patent Office

Office européen des brevets

(19)

(11)     EP 1 640 977 A1

(12)     **EUROPEAN PATENT APPLICATION**
published in accordance with Art. 158(3) EPC

(43) Date of publication:
**29.03.2006 Bulletin 2006/13**

(51) Int Cl.:
*G11B 7/0045* (2000.01)      *G11B 7/005* (2000.01)
*G11B 7/125* (1985.01)      *G11B 7/24* (1968.09)

(21) Application number: **04746971.3**

(22) Date of filing: **29.06.2004**

(86) International application number:
**PCT/JP2004/009502**

(87) International publication number:
**WO 2005/004120 (13.01.2005 Gazette 2005/02)**

(84) Designated Contracting States:
**AT BE BG CH CY CZ DE DK EE ES FI FR GB GR
HU IE IT LI LU MC NL PL PT RO SE SI SK TR**

(30) Priority: **01.07.2003 JP 2003270066**

(71) Applicant: **TDK Corporation
Chuo-ku,
Tokyo 103-8272 (JP)**

(72) Inventors:
• **KIKUKAWA, Takashi,**
**c/o TDK Corporation**
**Chuo-ku, Tokyo 103-8272 (JP)**
• **FUKUZAWA, Narutoshi,**
**c/o TDK Corporation**
**Chuo-ku, Tokyo 103-8272 (JP)**
• **KOBAYASHI, Tatsuhiro,**
**c/o TDK Corporation**
**Chuo-ku, Tokyo 103-8272 (JP)**

(74) Representative: **Grünecker, Kinkeldey,
Stockmair & Schwanhäusser
Anwaltssozietät
Maximilianstrasse 58
80538 München (DE)**

(54)     **OPTICAL RECORDING MEDIUM, OPTICAL RECORDING/REPRODUCING APPARATUS, OPTICAL RECORDING APPARATUS AND OPTICAL REPRODUCING APPARATUS, DATA RECORDING/REPRODUCING METHOD FOR OPTICAL RECORDING MEDIUM, AND DATA RECORDING METHOD AND DATA REPRODUCING METHOD**

(57)     An optical recording medium 10 having a substrate 11, an optically transparent layer 12, and a first dielectric layer 31, a noble metal oxide layer 23, a second dielectric layer 32, a light absorbing layer 22, a third dielectric layer 33 and a reflecting layer 21 which are disposed between the optically transparent layer 12 and the substrate 11, records and reproduces data into and from the optical recording medium 10 by irradiating the optical recording medium 10 with a laser beam 40 from the optically transparent layer 12 side. $\lambda$/NA is set to be not longer than 640 nm when $\lambda$ designates a wavelength of the laser beam 40 and NA designates a numerical aperture of an objective lens, and setting is done as $Pw \times 0.1 \leq Pr \leq Pw \times 0.5$ when Pw and Pr designate recording power and reproducing power of the laser beam 40 respectively, while a recording mark train including recording marks each having a length not larger than $\lambda/4NA$ is recorded and data are reproduced from the recording mark train.

FIG. 1 (a)

FIG. 1 (b)

# Description

<Technical Field>

The present invention relates to an optical recording medium, and particularly relates to a super-resolution type optical recording medium which can form minute recording marks smaller than a resolution limit and reproduce data from such recording marks. In addition, the present invention relates to an optical recording/reproducing apparatus, an optical recording apparatus and an optical reproducing apparatus, and particularly relates to an optical recording/reproducing apparatus, an optical recording apparatus and an optical reproducing apparatus which can record and/or reproduce data into and/or from a super-resolution type optical recording medium. Further, the present invention relates to a method for recording/reproducing data into/from an optical recording medium, a method for recording data into an optical recording medium and a method for reproducing data from an optical recording medium, and particularly relates to a method for recording/reproducing data into/from a super-resolution type optical recording medium, a method for recording data into a super-resolution type optical recording medium and a method for reproducing data from a super-resolution type optical recording medium

<Background Art>

In recent years, optical recording media represented by CDs (Compact Discs) or DVDs (Digital Versatile Discs) have been used broadly as recording media for recording a large volume of digital data.

Of the CDs, a type (CD-ROM) in which data cannot be written or rewritten has a structure in which a reflecting layer and a protective layer are laminated on an optically transparent substrate about 1.2 mm thick. The reflecting layer is irradiated with a laser beam with a wavelength of about 780 nm from the optically transparent substrate side so that data can be reproduced. On the other hand, of the CDs, a type (CD-R) in which data can be written once or a type (CD-RW) in which data can be rewritten has a structure in which a recording layer is added between the optically transparent substrate and the reflecting layer. The recording layer is irradiated with a laser beam with a wavelength of about 780 nm from the optically transparent substrate side so that data can be recorded and reproduced.

As for CDs, an objective lens with a numerical aperture of about 0.45 is used for focusing a laser beam. Thus, the beam spot diameter of the laser beam on the reflecting layer or the recording layer is narrowed down to about 1.6 $\mu$m. As a result, a recording capacity of about 700 MB and a data transfer rate of about 1 Mbps in a standard linear velocity (about 1.2 m/sec) are attained in CDs.

On the other hand, of DVDs, a type (DVD-ROM) in which data cannot be written or rewritten has a structure in which a lamination of a reflecting layer and a protective layer laminated on an optically transparent substrate about 0.6 mm thick and a dummy substrate about 0.6 mm thick are laminated to each other through an adhesive layer. The reflecting layer is irradiated with a laser beam with a wavelength of about 635 nm from the optically transparent substrate side so that data can be reproduced. On the other hand, of DVDs, a type (DVD-R or the like) in which data can be written once or a type (DVD-RW or the like) in which data can be rewritten has a structure in which a recording layer is added between the optically transparent substrate and the reflecting layer. The recording layer is irradiated with a laser beam with a wavelength of about 635 nm from the optically transparent substrate side so that data can be recorded and reproduced.

As for DVDs, an objective lens with a numerical aperture of about 0.6 is used for focusing a laser beam. Thus, the beam spot diameter of the laser beam on the reflecting layer or the recording layer is narrowed down to about 0.93 $\mu$m. In such a manner, a laser beam whose wavelength is shorter than that for CDs and an objective lens whose numerical aperture is higher than that for CDs are used for recording and reproducing DVDs. Thus, a beam spot diameter smaller than that for CDs is attained. As a result, a recording capacity of about 4.7 GB per surface and a data transfer rate of about 11 Mbps in a standard linear velocity (about 3.5 m/sec) are attained in DVDs.

In recent years, there has been proposed an optical recording medium which has a data recording capacity larger than that of DVD and which can attain a data transfer rate higher than that of DVD. In such an advanced optical recording medium, in order to attain a large capacity and a high data transfer rate, a laser beam with a wavelength of about 405 nm is used, and an objective lens with a numerical aperture of about 0.85 is used. Consequently, the beam spot diameter of the laser beam is narrowed down to about 0.43 $\mu$m, so that a recording capacity of about 25 GB per surface and a data transfer rate of about 36 Mbps in a standard linear velocity (about 5.7 m/sec) can be attained.

In such a manner, an objective lens with a very high numerical aperture is used for advanced optical recording media. To this end, in order to secure a sufficient tilt margin and suppress occurrence of coma aberration, the thickness of the optically transparent layer serving as an optical path of a laser beam is set to be very thin, about 100 $\mu$m thick. In the advanced optical recording media, it is therefore difficult to form various functional layers such as a recording layer on the optically transparent substrate as in the existing optically recording media such as CDs or DVDs. There has been considered a method in which a reflecting layer or a recording layer is formed on a substrate, and a thin resin layer is then formed thereon by a spin coat method or the like so as to serve as an optically transparent layer. That is, in production of an advanced optical recording medium, layers are formed sequentially from the opposite side to the light entrance surface, differently from production of an existing optical recording medium in which layers are formed sequentially from the light entrance surface side.

As described above, increase in the capacity and the data transfer rate of the optical recording medium can be achieved mainly by the reduction of the beam spot diameter of the laser beam. Accordingly, in order to attain a larger capacity and a higher data transfer rate, the beam spot diameter has to be reduced further. However, when the wavelength of the laser beam is made shorter, the absorption of the laser beam in the optically transparent layer may increase suddenly, or the aged deterioration of the optically transparent layer may increase. It is therefore difficult to make the wavelength shorter. In addition, it is also difficult to make the numerical aperture of the objective lens higher when difficulty in lens design, security of the tilt margin, and so on, are taken into consideration. That is, it can be said that it is very difficult to make the beam spot diameter of the laser beam shorter.

From such a situation, in recent years, a super-resolution type optical recording medium has been proposed as another approach to attainment of increase in capacity and increase in data transfer rate. The super-resolution type optical recording medium designates an optical recording medium in which minute recording marks smaller than a resolution limit can be formed, and data can be reproduced from the recording marks. By use of such an optical recording medium, increase in capacity and increase in data transfer rate can be attained without reducing the beam spot diameter.

More specifically, a diffraction limit $d_1$ is obtained by:

$$d_1 = \lambda/2NA$$

when $\lambda$ designates the wavelength of the laser beam, and NA designates the numerical aperture of the objective lens. Accordingly, in an optical recording medium such as a CD or a DVD, which is a type in which data are expressed by the length of each recording mark and the length of each blank region, that is, a distance between edges, a single frequency signal resolution limit $d_2$ is obtained by:

$$d_2 = \lambda/4NA$$

That is, in the usual optical recording medium which is not a super-resolution type, when the length of the shortest recording mark or the shortest blank region is shorter than a resolution limit, the recording mark and the blank region cannot be resolved from each other. On the other hand, in the super-resolution type optical recording medium, recording marks or blank regions shorter than the resolution limit can be used. It is therefore possible to attain increase in capacity and increase in data transfer rate without reducing the beam spot diameter.

As the super-resolution type optical recording medium, there has been heretofore proposed a super-resolution type optical recording medium called "scattering type Super RENS" (Super Resolution Near-field Structure) (see Non-Patent Document 1). This optical recording medium can be considered as follows. In this optical recording medium, a phase change material layer and a mask layer made of metal oxide are used. When irradiated with a laser beam, the metal oxide forming the mask layer is decomposed in a high energy portion at the center of a beam spot. Due to metal particulars generated from the decomposed metal oxide, the laser beam scatters to generate near-field light. As a result, the phase change material layer is locally irradiated with the near-field light so that super-resolution recording and super-resolution reproducing can be performed using a phase change generated thus. Then, when the laser beam recedes, the metal and oxygen produced by the decomposition of the mask layer are bonded with each other again so as to return to its original metal oxide. It is therefore estimated that repeat rewriting can be performed.

According to researches of the present inventors, however, it has been proved that a phase change of the phase change layer hardly emerges as a signal in the super-resolution type optical recording medium called "scattering type Super RENS", and the decomposition of the mask layer is irreversible. That is, it has been proved that the super-resolution type optical recording medium called "scattering type Super RENS" can be implemented not as a rewritable optical recording medium in which reversible recording marks can be formed in the phase change material layer but as a write-once-read-many optical recording medium in which irreversible recording marks can be formed in the mask layer (noble metal oxide layer) (see Non-Patent Document 2).

Here, the reason why minute recording marks smaller than a resolution limit can be formed in the noble metal oxide layer is that the noble metal oxide layer is decomposed locally in the high energy portion at the center of the beam spot so that the region is plastically deformed due to a bubble pit generated by the decomposition. The plastically deformed portion is used as a recording mark, and the portion which is not plastically deformed is used as a blank region. The reason why data can be reproduced from the minute recording marks formed thus has not been made clear so far. However, as disclosed in Non-Patent Document 2, excellent signal characteristics can be obtained in super-resolution reproduction using a laser beam with a wavelength of 635 nm and an objective lens with a numeral aperture of 0.6. The laser beam with wavelength of 635 nm and the objective lens with a numeral aperture of 0.6 are optics used for recording and reproducing DVDs as mentioned above. Accordingly, also in the super-resolution type optical recording medium, it can be imagined that a higher recording density and a higher data transfer rate will be obtained if a laser beam with a shorter wavelength and an objective lens with a higher numerical aperture are used as in the advanced optical recording medium.

[Non-Patent Document 1] "A near-field recording and readout technology using a metallic probe in an optical disk", Jap. J. Appl. Phys., edited by The Japan Society of Applied Physics, 2000, Volume 39, p. 980-981.

[Non-Patent Document 2] "Rigid bubble pit formation and huge signal enhancement in super-resolution near-field structure disk with platinum-oxide layer", Applied Physics Letters, American Institute of Physics, December 16, 2002, Volume 81, Number 25, p. 4697-4699

As described above, however, the mechanism by which data can be reproduced from recording marks smaller than a resolution limit in the super-resolution type optical recording medium is not clear. It is therefore unknown whether super-resolution reproducing can be attained or not even when a laser beam with a wavelength shorter than 635 nm or an objective lens with a numerical aperture higher than 0.6 is used. Further, even if super-resolution reproducing can be attained, it is practically impossible to imagine how to set the configuration of layers, the material of each layer, and further the thickness of each layer or the like in order to obtain excellent signal characteristics, or how to set the power of the laser beam in order to obtain excellent signal characteristics.

<Disclosure of the Invention>

It is therefore an object of the present invention to provide a super-resolution type optical recording medium having a noble metal oxide layer, wherein super-resolution recording and super-resolution reproducing can be performed using a laser beam with a shorter wavelength and an objective lens with a higher numerical aperture.

It is another object of the present invention to provide an optical recording/reproducing apparatus which can record and reproduce data into and from a super-resolution type optical recording medium, and which can obtain excellent characteristics.

It is a further object of the present invention to provide an optical recording apparatus which can record data into a super-resolution type optical recording medium, and which can obtain excellent characteristics.

It is a further object of the present invention to provide an optical reproducing apparatus which can reproduce data from a super-resolution type optical recording medium, and which can obtain excellent characteristics.

It is a further object of the present invention to provide a data recording/reproducing method, a data recording method and a data reproducing method, which are aimed at a super-resolution type optical recording medium, and which can obtain excellent characteristics.

An optical recording medium according to an aspect of the present invention is an optical recording medium including a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical recording medium is characterized in that: setting is done so that $\lambda$/NA is not longer than 640 nm when $\lambda$ designates a wavelength of a laser beam and NA designates a numerical aperture of an objective lens for focusing the aforementioned laser beam, and setting is done as:

$$Pw \times 0.1 \leq Pr \leq Pw \times 0.5$$

when Pw designates recording power of the aforementioned laser beam and Pr designates reproducing power of the aforementioned laser beam, while the optical recording medium includes setting information required for recording a recording mark train including recording marks each having a length not larger than $\lambda$/4NA and for reproducing data from the aforementioned recording mark train.

According to the present invention, excellent characteristics can be obtained in super-resolution recording and super-resolution reproducing using a laser beam with a wavelength ($\lambda$) shorter than about 635 nm and an objective lens with a numerical aperture (NA) higher than about 0.6, particularly in super-resolution recording and super-resolution reproducing using a laser beam with a wavelength of about 405 nm and an objective lens with a numerical aperture of about 0.85, which are used for advanced optical recording media.

An optical recording medium according to another aspect of the present invention is an optical recording medium including a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical recording medium is characterized in that: setting is done so that λ/NA is not longer than 640 nm and recording power of a laser beam is not lower than 5.3 mW and not higher than 11.0 mW when λ designates a wavelength of the aforementioned laser beam and NA designates a numerical aperture of an objective lens for focusing the aforementioned laser beam, while the optical recording medium includes setting information required for recording a recording mark train including recording marks each having a length not larger than λ/4NA.

According to the present invention, excellent characteristics can be obtained in super-resolution recording using a laser beam with a wavelength (λ) shorter than about 635 nm and an objective lens with a numerical aperture (NA) higher than about 0.6, particularly in super-resolution recording using a laser beam with a wavelength of about 405 nm and an objective lens with a numerical aperture of about 0.85, which are used for advanced optical recording media.

An optical recording medium according to a further aspect of the present invention is an optical recording medium including a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical recording medium is characterized in that: setting is done so that λ/NA is not longer than 640 nm and reproducing power of a laser beam is not lower than 1.1 mW and not higher than 3.3 mW when λ designates a wavelength of the aforementioned laser beam and NA designates a numerical aperture of an objective lens for focusing the aforementioned laser beam, while the optical recording medium includes setting information required for reproducing data from a recording mark train including recording marks each having a length not larger than λ/4NA.

According to the present invention, excellent characteristics can be obtained in super-resolution reproducing using a laser beam with a wavelength (λ) shorter than about 635 nm and an objective lens with a numerical aperture (NA) higher than about 0.6, particularly in super-resolution reproducing using a laser beam with a wavelength of about 405 nm and an objective lens with a numerical aperture of about 0.85, which are used for advanced optical recording media.

Here, it is preferable that the aforementioned substrate is not thinner than 0.6 mm and not thicker than 2.0 mm, the aforementioned optically transparent layer is not thinner than 10 μm and not thicker than 200 μm, the aforementioned noble metal oxide layer is not thinner than 2 nm and not thicker than 50 nm, the aforementioned second dielectric layer is not thinner than 5 nm and not thicker than 100 nm, the aforementioned light absorbing layer is not thinner than 5 nm and not thicker than 100 nm, and the aforementioned third dielectric layer is not thinner than 10 nm and not thicker than 140 nm. When the thicknesses of the substrate and the respective layers are set thus, very excellent characteristics can be obtained in super-resolution recording and super-resolution reproducing using a laser beam with a wavelength of about 405 nm and an objective lens with a numerical aperture of about 0.85.

In addition, it is preferable that platinum oxide (PtOx) is included in the noble metal oxide layer. In this case, it is the most preferable that substantially the whole of the noble metal oxide layer is composed of platinum oxide (PtOx), but other materials or impurities mixed unavoidably may be contained. When platinum oxide (PtOx) is used as the material of the noble metal oxide layer, excellent signal characteristics and sufficient durability can be obtained.

In addition, it is preferable that the optical recording medium according to the present invention further includes a reflecting layer between the substrate and the third dielectric layer. When the reflecting layer is provided thus, the intensity of a reproduced signal can be enhanced while the reproduction durability can be improved on a large scale. Here, the "reproduction durability" means durability against a reproduction deterioration phenomenon, that is, a phenomenon that the state of the noble metal oxide layer changes due to the energy of the laser beam radiated at the time of reproducing, so that increase of noise or reduction of a carrier occurs to lower the CNR. The reflecting layer is preferably not thinner than 5 nm and not thicker than 200 nm, more preferably not thinner than 10 nm and not thicker than 100 nm, and most preferably not thinner than 10 nm and not thicker than 50 nm. When the thickness of the reflecting layer is set thus, a sufficient effect of improving the reproduction durability can be obtained without lowering the productivity.

An optical recording/reproducing apparatus according to the present invention is an optical recording/ reproducing apparatus for recording and reproducing data into and from an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical recording/reproducing apparatus is characterized in that: setting is done so that λ/NA is not longer than 640 nm when λ designates a wavelength of the aforementioned laser beam and NA designates a numerical aperture of an objective lens for focusing the aforementioned laser beam, and setting is done as $Pw \times 0.1 \leq Pr \leq Pw \times 0.5$ when Pw designates recording power of the aforementioned laser beam and Pr designates reproducing power of the aforementioned laser beam, while the optical recording/reproducing apparatus records a recording mark train including recording marks each having a length not larger than $\lambda$/4NA and reproduces data from the aforementioned recording mark train. According to the optical recording/reproducing apparatus according to the present invention, excellent characteristics can be obtained in recording and reproducing data into and from a super-resolution type optical recording medium.

An optical recording apparatus according to the present invention is an optical recording apparatus for recording data into an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical recording apparatus is characterized in that setting is done so that $\lambda$/NA is not longer than 640 nm and recording power of the aforementioned laser beam is not lower than 5.3 mW and not higher than 11.0 mW when $\lambda$ designates a wavelength of the aforementioned laser beam and NA designates a numerical aperture of an objective lens for focusing the aforementioned laser beam, while the optical recording apparatus records a recording mark train including recording marks each having a length not larger than $\lambda$/4NA. According to the optical recording apparatus according to the present invention, excellent characteristics can be obtained in recording data into a super-resolution type optical recording medium.

In addition, an optical reproducing apparatus according to the present invention is an optical reproducing apparatus for reproducing data from an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The optical reproducing apparatus is characterized in that setting is done so that $\lambda$/NA is not longer than 640 nm and reproducing power of the aforementioned laser beam is not lower than 1.1 mW and not higher than 3.3 mW when $\lambda$ designates a wavelength

of the aforementioned laser beam and NA designates a numerical aperture of an objective lens for focusing the aforementioned laser beam, while the optical reproducing apparatus reproduces data from a recording mark train including recording marks each having a length not larger than $\lambda$/4NA. According to the optical reproducing apparatus according to the present invention, excellent characteristics can be obtained in reproducing data from a super-resolution type optical recording medium.

A data recording/reproducing method according to the present invention is a data recording/reproducing method for recording and reproducing data into and from an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The data recording/reproducing method is characterized in that setting is done so that $\lambda$/NA is not longer than 640 nm when $\lambda$ designates a wavelength of the aforementioned laser beam and NA designates a numerical aperture of an objective lens for focusing the aforementioned laser beam, and setting is done as $Pw \times 0.1 \leq Pr \leq Pw \times 0.5$ when Pw designates recording power of the aforementioned laser beam and Pr designates reproducing power of the aforementioned laser beam, while the data recording/reproducing method records a recording mark train including recording marks each having a length not larger than $\lambda$/4NA and reproduces data from the aforementioned recording mark train. According to the optical recording/reproducing method according to the present invention, excellent characteristics can be obtained in recording and reproducing data into and from a super-resolution type optical recording medium.

A data recording method according to the present invention is a data recording method for recording data into an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The data recording method is characterized in that setting is done so that $\lambda$/NA is not longer than 640 nm and a value of recording power of the aforementioned laser beam is not lower than 5.3 mW and not higher than 11.0 mW when λ designates a wavelength of the aforementioned laser beam and NA designates a numerical aperture of an objective lens for focusing the aforementioned laser beam, while the data recording method records a recording mark train including recording marks each having a length not larger than λ/4NA.

According to the data recording method according to the present invention, excellent characteristics can be obtained in recording data into a super-resolution type optical recording medium. In this case, it is preferable that the value of the recording power is set to be at least 0.5 mW and at most 2.0 mW higher than a value of recording power with which the carrier/noise ratio will be substantially saturated. When the value of the recording power is set thus, recording can be performed surely in a region where the carrier/noise ratio is substantially saturated, without setting the recording power to be higher than necessary.

A data reproducing method according to the present invention is a data reproducing method for reproducing data from an optical recording medium by irradiating the optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer. The first dielectric layer, the noble metal oxide layer, the second dielectric layer, the light absorbing layer and the third dielectric layer are disposed between the aforementioned optically transparent layer and the aforementioned substrate in this order in view from the aforementioned optically transparent layer. The data reproducing method is characterized in that setting is done so that λ/NA is not longer than 640 nm and a value of reproducing power of the aforementioned laser beam is not lower than 1.1 mW and not higher than 3.3 mW when λ designates a wavelength of the aforementioned laser beam and NA designates a numerical aperture of an objective lens for focusing the aforementioned laser beam, while the data reproducing method reproduces data from a recording mark train including recording marks each having a length not larger than λ/4NA.

According to the data reproducing method according to the present invention, excellent characteristics can be obtained in reproducing data from a super-resolution type optical recording medium. In this case, it is preferable that the value of the reproducing power is set to be at least 0.1 mW and at most 0.3 mW higher than a value of reproducing power with which the carrier/noise ratio will be substantially saturated. When the value of the reproducing power is set thus, reproducing can be performed surely in a region where the carrier/noise ratio is substantially saturated, while suppressing the reproduction deterioration phenomenon.

According to the present invention, super-resolution recording and super-resolution reproducing can be performed with λ/NA set to be not lower than 640 nm by use of a laser beam with a wavelength shorter than about 635 nm and an objective lens with a numerical aperture higher than about 0.6. Good characteristics can be obtained particularly in super-resolution recording and super-resolution reproducing using a laser beam with a wavelength of about 405 nm and an objective lens with a numerical aperture of about 0.85, which are used for advanced optical recording media. Accordingly, a recording/reproducing apparatus similar to a recording/reproducing apparatus for the advanced optical recording media can be used. It is therefore possible to suppress the development cost and the manufacturing cost of the recording/reproducing apparatus.

In addition, according to the present invention, the recording power or the reproducing power of the laser beam at the time of recording data or at the time of reproducing data is set to a proper intensity. Accordingly, good signal characteristics can be obtained.

<Brief Description of the Drawings>

Fig. 1(a) is a cross section perspective view showing the outline of an optical recording medium 10 according to a preferred embodiment of the present invention, and Fig. 1(b) is a partial sectional view in which a portion A shown in Fig. 1 (a) is enlarged.

Fig. 2 is a view schematically showing a state where the optical recording medium 10 is irradiated with a laser beam 40.

Fig. 3 (a) is a plan view showing a beam spot of the laser beam 40 on a noble metal oxide layer 23, and Fig. 3(b) is a diagram showing the intensity distribution thereof.

Fig. 4 is a view for explaining the size of a bubble pit 23a (recording mark).

Fig. 5 is a waveform diagram showing an example of an intensity modulation pattern of the laser beam 40 at the time of recording.

Fig. 6 is a waveform diagram showing another example of an intensity modulation pattern of the laser beam 40 at the time of recording.

Fig. 7 is a graph schematically showing the relationship between recording power of the laser beam 40 and CNR of a reproduced signal obtained by reproduction performed after the recording.

Fig. 8 is a graph schematically showing the relationship between reproducing power of the laser beam 40 and CNR.

Fig. 9 is a schematic configuration diagram of an optical recording/reproducing apparatus 100 capable of recording and reproducing data into and from the optical recording medium 10.

Fig. 10 is a graph showing a measuring result in Characteristic Evaluation 1.

Fig. 11 is a graph showing a measuring result in Characteristic Evaluation 2.

<Best Mode for Carrying Out the Invention>

A preferred embodiment of the present invention will be described below in detail with reference to the accompanying drawings.

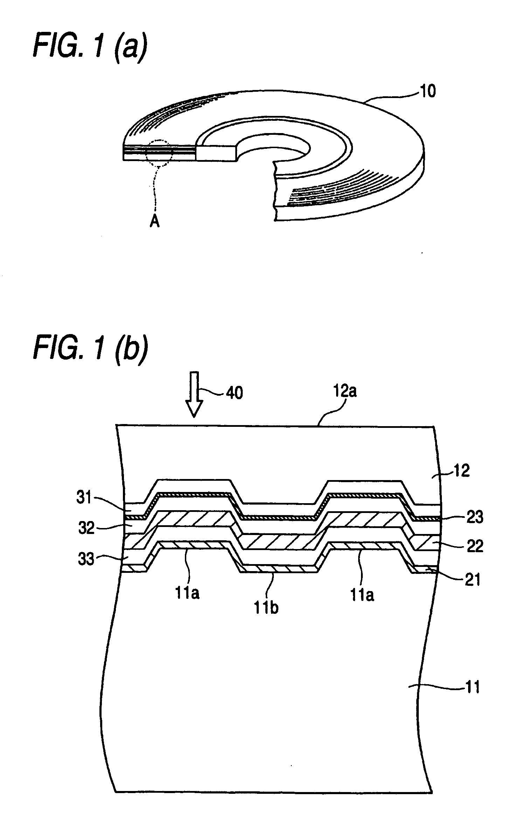

Fig. 1(a) is a cross section perspective view showing the outline of an optical recording medium 10 according to a preferred embodiment of the present invention, and Fig. 1 (b) is a partial sectional view in which a portion A shown in Fig. 1(a) is enlarged.

As shown in Fig. 1(a), the optical recording medium 10 according to this embodiment has a disc-like shape. As shown in Fig. 1(b), the optical recording medium 10 is constituted by a substrate 11, an optically transparent layer 12, a reflecting layer 21, a light absorbing layer 22, a noble metal oxide layer 23, and dielectric layers 33, 32 and 31. The reflecting layer 21, the light absorbing layer 22 and the noble metal oxide layer 23 are provided between the substrate 11 and the optically transparent layer 12 in this order. The dielectric layers 33, 32 and 31 are provided between the reflecting layer and the light absorbing layer 22, between the light absorbing layer 22 and the noble metal oxide layer 23 and between the noble metal oxide layer 23 and the optically transparent layer 12 respectively. Data recording and reproducing can be performed by irradiating the optical recording medium 10 with a laser beam 40 from a light entrance surface 12a side while rotating the optical recording medium 10. The wavelength of the laser beam 40 can be set to be shorter than 635 nm. Particularly it is the most preferable that the wavelength is set to be about 405 nm so that the laser beam 40 can be used for an advanced optical recording medium. On the other hand, the numerical aperture of an objective lens for focusing the laser beam 40 can be set to be higher than 0.6. Particularly the numerical aperture can be set to be about 0.85 so that the objective lens can be used for the advanced optical recording medium.

The substrate 11 is a disc-like substrate serving to secure mechanical strength required of the optical recording medium 10. In one of the surfaces of the substrate 11, a groove 11a and a land 11b for guiding the laser beam 40 are formed spirally from the vicinity of the center portion thereof toward the outer edge portion or from the outer edge portion toward the vicinity of the center portion. As long as the mechanical strength can be secured, the material or the thickness of the substrate 11 is not limited especially. For example, glass, ceramics, resin, etc. can be used as the material of the substrate 11. In consideration of ease in molding, it is preferable to use the resin. Examples of the resin may include polycarbonate resin, olefin resin, acrylic resin, epoxy resin, polystyrene resin, polyethylene resin, polypropylene resin, silicone resin, fluoro-resin, ABS resin, urethane resin, etc. Of them, it is especially preferred to use polycarbonate resin or olefin resin in view of easiness of molding or the like. Since the substrate 11 does not serve as an optical path of the laser beam 40, it is not necessary to select a material high in optical transparency in a wavelength band of the laser beam 40.

It is preferable that the substrate 11 is set to have a thickness necessary and sufficient to secure the mechanical strength, for example, to be not thinner than 0.6 mm and not thicker than 2.0 mm. When compatibility with existing optical recording media or advanced optical recording media is taken into consideration, it is preferable that the substrate 11 is set to be not thinner than 1.0 mm and not thicker than 1.2 mm, particularly to be about 1.1 mm thick. The diameter of the substrate 11 is not limited especially, either. When compatibility with existing optical recording media or advanced optical recording media is taken into consideration, it is preferable that the diameter of the substrate is set to be about 120 mm.

The optically transparent layer 12 is a layer serving as an optical path of the laser beam 40 radiated at the time of recording and at the time of reproducing. The material of the optically transparent layer 12 is not limited especially. Any material such as optically transparent resin or the like can be used if it is a material having a sufficiently high optical transparency in the wavelength band of the laser beam 40 to be used. In the optical recording medium 10 according to this embodiment, the optically transparent layer 12 is set to be not thinner than 10 $\mu$m and not thicker than 200 $\mu$m. This reason is as follows. If the optically transparent layer 12 is thinner than 10 $\mu$m, the beam diameter on the light entrance surface 12a will be very small so that wound or dirt of the light entrance surface 12a will have too great influence on recording or reproducing. If the optically transparent layer 12 is thicker than 200 $\mu$m, it will be difficult to secure a tilt margin or suppress coma aberration. In addition, in consideration of compatibility with the advanced optical recording media, it is preferable to set the optically transparent layer 12 to be not thinner than 50 $\mu$m and not thicker than 150 $\mu$m, and it is especially preferable to set the optically transparent layer 12 to be not thinner than 70 $\mu$m and not thicker than 120 $\mu$m.

The reflecting layer 21 is a layer serving to increase the intensity of a reproduced signal and improve the reproduction durability. As for the material of the reflecting layer 21, elementary metals or alloys of gold (Au), silver (Ag), copper (Cu), platinum (Pt), aluminum (Al), titanium (Ti), chrome (Cr), iron (Fe), cobalt (Co), nickel (Ni), magnesium (Mg), zinc (Zn), germanium (Ge), etc. can be used. The thickness of the reflecting layer 21 is not limited especially. It is preferable to set the reflecting layer 21 to be not thinner than 5 nm and not thicker than 200 nm. It is more preferable to set the reflecting layer 21 to be not thinner than 10 nm and not thicker than 100 nm, and it is the most preferable to set the reflecting layer 21 to be not thinner than 10 nm and not thicker than 50 nm. This reason is as follows. If the reflecting layer 21 is thinner than 5 nm, the effect of improving the reproduction durability cannot be obtained sufficiently. If the reflecting layer 21 is thicker than 200 nm, it will take much time to form the layer so that the productivity will deteriorate, while it will be difficult to obtain more effect of improving the reproduction durability. In contrast, when the reflecting layer 21 is set to be not thinner than 10 nm and not thicker than 100 nm, particularly not thinner than 10 nm and not thicker than 50 nm, sufficient effect of improving the reproduction durability can be obtained without reducing the productivity on a large scale. Although it is not essential in the present invention to provide the reflecting layer 21 in the optical recording medium, the aforementioned effect can be obtained by providing the reflecting layer 21.

The light absorbing layer 22 is a layer mainly serving to absorb the energy of the laser beam 40 and convert this into heat. As the material of the light absorbing layer 22, it is preferable to use a material having a high absorption in the wavelength band of the laser beam 40 to be used, and having hardness low enough not to prevent deformation of the noble metal oxide layer 23 at the time of recording. As for materials satisfying such conditions as to the laser beam 40 whose wavelength is shorter than 635 nm, phase change materials to be used as materials of recording layers in rewritable optical recording media can be enumerated. As for the phase change materials, it is preferable to use an alloy of antimony (Sb), tellurium (Te) and germanium (Ge) or a material in which an additive is added to the alloy.

Specifically, when the atomic ratio of the phase change material forming the light absorbing layer 22 is expressed by:

$$(Sb_a Te_{1-a})_{1-b} M_b;$$

or

$$\{(GeTe)_c (Sb_2 Te_3)_{1-c}\}_d M_{1-d};$$

(when M designates an element excluding antimony (Sb), tellurium (Te) and germanium (Ge))
it is preferable to set the values as:
$0 \leq a \leq 1$ ; and
$0 \leq b \leq 0.25$; or
$1/3 \leq c \leq 2/3$; and
$0.9 \leq d$

Particularly when the value $\underline{b}$ exceeds 0.25, there is a fear that the light absorption coefficient may be lower than a value required of the light absorbing layer 22, and there is a fear that the thermal conductivity may be lower than a value required of the light absorbing layer 22. Therefore, such a value is not preferable.

The kind of the element M is not limited especially. It is preferable to select one or two or more elements from a group consisting of indium (In), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O) and rare-earth elements (scandium (Sc), yttrium (Y) and lanthanoids). Particularly when a laser beam whose wavelength is 390 nm to 420 nm is used, it is preferable to select one or two or more elements from a group consisting of silver (Ag), indium (In) and rare-earth elements as the element M. As a result, it is possible to good signal characteristics when a layer beam whose wavelength is 390 nm to 420 nm, particularly a laser beam whose wavelength is about 405 nm is used.

Even when a phase change material is used as the material of the light absorbing layer 22, a phase change caused by recording hardly appear as a signal. This is the reason why it is not essential to use a phase change material as the material of the light absorbing layer 22. However, so far the present inventor has confirmed that the best signal characteristic can be obtained when a phase change material, particularly a phase change material having the aforementioned composition is used as the material of the light absorbing layer 22.

As for the thickness of the light absorbing layer 22, it is preferable to set the light absorbing layer 22 to be not thinner than 5 nm and not thicker than 100 nm when a phase change material is used as the material of the light absorbing layer 22. It is more preferable to set the light absorbing layer 22 to be not thinner than 10 nm and not thicker than 80 nm, and it is especially preferable to set the light absorbing layer 22 to be not thinner than 10 nm and not thicker than 60 nm. This reason is as follows. When the light absorbing layer 22 is thinner than 5 nm, there is a fear that the light absorbing layer 22 cannot absorb the energy of the laser beam sufficiently. When the light absorbing layer 22 is thicker than 100 nm, it will take much time to form the layer so that the productivity will deteriorate. In contrast, when the light absorbing layer 22 is set to be not thinner than 10 nm and not thicker than 80 nm, particularly to be not thinner than 10 nm and not thicker than 60 nm, it is possible to absorb the energy of the laser beam 40 sufficiently while ensuring high productivity.

The noble metal oxide layer 23 is a layer in which recording marks will be formed by irradiation with the laser beam 40. The noble metal oxide layer 23 has noble metal oxide as its main component. The kind of noble metal is not limited especially. It is preferable to use at least one of platinum (Pt), silver (Ag) and palladium (Pd), and it is especially preferable to use platinum (Pt). That is, it is especially preferable to select platinum oxide (PtOx) as the material of the noble metal oxide layer 23. When platinum oxide (PtOx) is used as the material of the noble metal oxide layer 23, good signal characteristics and sufficient durability can be obtained. When platinum oxide (PtOx) is used as the material of the noble metal oxide layer 23, it is preferable to set the value $\underline{x}$ so that a mortality factor (k) in the wavelength band of the laser beam 40 to be used is smaller than 3 (k<3).

The thickness of the noble metal oxide layer 23 has great influence on the signal characteristics. In order to obtain good signal characteristics, it is preferable to set the noble metal oxide layer 23 to be not thinner than 2 nm and not thicker than 50 nm, and it is more preferable to set the noble metal oxide layer 23 to be not thinner than 2 nm and not thicker than 30 nm. In order to obtain especially good signal characteristics, the noble metal oxide layer 23 is preferably set to be not thinner than 2 nm and not thicker than 8 nm, more preferably to be not thinner than 2 nm and not thicker than 6 nm, and especially preferably to be about 4 nm thick. When the noble metal oxide layer 23 is thinner than 2 nm or thicker than 50 nm, there is a fear that recording marks having good shapes cannot be formed in spite of irradiation with the laser beam 40, with the result that a satisfactory carrier/noise ratio (CNR) cannot be obtained. In contrast, when the noble metal oxide layer 23 is set to be not thinner than 3 nm and not thicker than 30 nm, especially to be about 4 nm thick, recording marks having good shapes can be formed so that a high CNR can be obtained.

The dielectric layers 31, 32 and 33 serve to physically and chemically protect respective layers adjacent thereto while adjusting their optical properties. In this specification, the dielectric layers 31, 32 and 33 are also referred to as first, second and third dielectric layers respectively. As the materials of the dielectric layers 31, 32 and 33, oxides, sulfides, nitrides or combinations of these can be used as main components. Specifically, it is preferable to use oxides, nitrides, sulfides, carbides of aluminum (Al), silicon (Si), cerium (Ce), titanium (Ti), zinc (Zn), tantalum (Ta), etc., or mixtures of those, such as $Al_2O_3$, AlN, ZnO, ZnS, GeN, GeCrN, $CeO_2$, SiO, $SiO_2$, $Si_3N_4$, SiC, $La_2O_3$, TaO, $TiO_2$, SiAlON (mixture of $SiO_2$, $Al_2O_3$, $Si_3N_4$ and AlN) and LaSiON (mixture of $La_2O_3$, $SiO_2$ and $Si_3N_4$), etc. Particularly, it is preferable to use a mixture of ZnS and $SiO_2$. In this case, it is preferable to set the ratio of ZnS to be not lower than 70 mol% and not higher than 90 mol%, and set the ratio of $SiO_2$ to be not lower than 10 mol% and not higher than 30 mol%. It is the most preferable to set the mol ratio of ZnS to $SiO_2$ to be about 80:20.

The dielectric layers 31, 32 and 33 may be composed of the same material as one another, or a part or all of them may be composed of different materials. Further, at least one of the dielectric layers 31, 32 and 33 may have a multilayer structure consisting of a plurality of layers.

The dielectric layer 33 is preferably set to be not thinner than 10 nm and not thicker than 140 nm, and more preferably set to be not thinner than 20 nm and not thicker than 120 nm. This reason is as follows. When the dielectric layer 33 is thinner than 10 nm, there is a fear that the dielectric layer 33 cannot protect the light absorbing layer 22 sufficiently. When the dielectric layer 33 is thicker than 140 nm, it will take much time to form the layer so that the productivity will deteriorate. In contrast, when the dielectric layer 33 is set to be not thinner than 20 nm and not thicker than 120 nm, it is possible to effectively protect the light absorbing layer 22 while securing high productivity.

The dielectric layer 32 is preferably set to be not thinner than 5 nm and not thicker than 100 nm, and more preferably set to be not thinner than 20 nm and not thicker than 100 nm. This reason is as follows. When the dielectric layer 32 is thinner than 5 nm, there is a fear that the dielectric layer 33 may be broken at the time of decomposition of the noble metal oxide layer 23 so that the dielectric layer 33 cannot protect the noble metal oxide layer 23. When the dielectric layer 33 is thicker than 100 nm, there is a fear that the noble metal oxide layer 23 cannot be deformed sufficiently at the time of recording. In contrast, when the dielectric layer 32 is set to be not thinner than 20 nm and not thicker than 100 nm, it is possible to prevent excessive obstruction to deformation of the noble metal oxide layer 23 while protecting the noble metal oxide layer 23 sufficiently. The thickness of the dielectric layer 32 also has influence on signal characteristics at the time of reproducing data. When the dielectric layer 32 is set to be not thinner than 50 nm and not thicker than 70 nm, particularly to be about 60 nm thick, it is possible to obtain a high CNR.

The thickness of the dielectric layer 31 may be defined in accordance with a required reflectivity as long as the dielectric layer 31 can protect the noble metal oxide layer 23 sufficiently. For example, the dielectric layer 31 is preferably set to be not thinner than 30 nm and not thicker than 120 nm, more preferably set to be not thinner than 50 nm and not thicker than 100 nm, and especially preferably set to be about 70 nm thick. This reason is as follows. When the dielectric layer 31 is thinner than 30 nm, there is a fear that the dielectric layer 31 cannot protect the noble metal oxide layer 23 sufficiently. When the dielectric layer 31 is thicker than 120 nm, it will take much time to form the layer so that the productivity will deteriorate. In contrast, when the dielectric layer 31 is set to be not thinner than 50 nm and not thicker than 100 nm, particularly to be about 70 nm thick, it is possible to sufficiently protect the noble metal oxide layer 23 while securing high productivity.

The optical recording medium 10 has the structure which has been described above.

The optical recording medium 10 having such a structure can be manufactured by first preparing the substrate 11 and sequentially forming the reflecting layer 21, the dielectric layer 33, the light absorbing layer 22, the dielectric layer 32, the noble metal oxide layer 23, the dielectric layer 31 and the optically transparent layer 12 on the surface of the substrate 11 where the groove 11a and the land 11b have been formed. That is, in the manufacture of the optical recording medium 10, layers are formed sequentially from the opposite side to the light entrance surface 12a in the same manner as advanced optical recording media.

For the formation of the reflecting layer 21, the dielectric layer 33, the light absorbing layer 22, the dielectric layer 32, the noble metal oxide layer 23 and the dielectric layer 31, a vapor deposition method using chemical species containing constituent elements of these layers can be used. For example, a sputtering method or a vacuum deposition method can be used. Of them, it is preferred to use the sputtering method. On the other hand, the optically transparent layer 12 can be formed in the following method. For example, acrylic-based or epoxy-based ultraviolet-curing resin whose viscosity has been adjusted is applied in a spin coat method, and irradiated with ultraviolet rays in a nitrogen atmosphere so as to be cured. The optically transparent layer 12 may be formed not by the spin coat method but by use of an optically transparent sheet having optically transparent resin as its main component and various adhesive agents or tackiness agents.

A hard coat layer may be provided on the surface of the optically transparent layer 12 so as to protect the surface of the optically transparent layer 12. In this case, the surface of the hard coat layer forms the light entrance surface 12a. For example, ultraviolet-curing resin containing epoxy acrylate oligomer (bifunctional oligomer), polyfunctional acrylic monomer or monofunctional acrylic monomer together with photo-polymerization initiator, or oxide, nitride, sulfide or carbide of aluminum (Al), silicon (Si), cerium (Ce), titanium (Ti), zinc (Zn), tantalum (Ta), or the like, or a mixture of those can be used as the material of the hard coat layer, When the ultraviolet-curing resin is used as the material of the hard coat layer, it is preferable to form the ultraviolet-curing resin on the optically transparent layer 12 by a spin coat method. When the aforementioned oxide, nitride, sulfide or carbide or a mixture of those is used, it is preferable to use a vapor deposition method using chemical species containing these constituent elements. For example, a sputtering method or a vacuum deposition method can be used. Of them, it is preferred to use the sputtering method.

The hard coat layer also serves to prevent the light entrance surface 12a from being wounded. It is therefore preferable that the hard coat layer is hard and has lubricity. In order to give lubricity to the hard coat layer, it is effective to blend a lubricant with the material (e.g. $SiO_2$) serving as a parent material of the hard coat layer. As the lubricant, it is preferable to select a silicone-based lubricant, a fluorine-based lubricant or a fatty-ester-based lubricant. The content of the lubricant is preferably made not lower than 0.1% by mass and not higher than 5.0% by mass.

Next, description will be made on the method and principle for recording data into the optical recording medium 10 according to this embodiment.

Data are recorded into the optical recording medium 10 as follows. That is, while the optical recording medium 10 is rotated, the noble metal oxide layer 23 is irradiated from the light entrance surface 12a side with the laser beam 40 with a wavelength shorter than 635 nm, particularly with a wavelength of about 405 nm which can be used for advanced optical recording media. In this case, as an objective lens for focusing the laser beam 40, it is possible to use an objective lens whose numerical aperture is higher than 0.6, particularly an objective lens with a numerical aperture of about 0.85, which can be used for advanced optical recording media. That is, data can be recorded by use of an optical system similar to an optical system which can be used for advanced optical recording media.

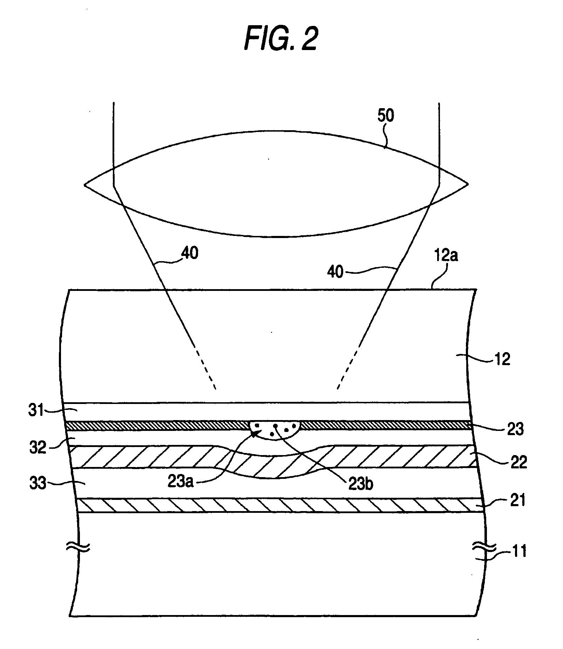

Fig. 2 is a schematic sectional view schematically showing a state where the optical recording medium 10 is irradiated with the laser beam 40. Incidentally, the section of the optical recording medium 10 shown in Fig. 2 is a section along the groove 11a or the land 11b.

As shown in Fig. 2, when the laser beam 40 with the aforementioned wavelength is focused by an objective lens 50 with the aforementioned numerical aperture and the optical recording medium 10 is irradiated with the laser beam 40, the noble metal oxide layer 23 is decomposed in the central portion of the beam spot so that a bubble pit 23a filled with oxygen gas ($O_2$) is formed. Inside the bubble pit 23a, precipitates 23b of constituent metal are dispersed. In this event, each layer existing around the bubble pit 23a is plastically deformed due to the pressure of the bubble pit 23a. Thus, this bubble pit 23a can be used as an irreversible recording mark. For example, when the material of the noble metal oxide layer 23 is platinum oxide (PtOx), the platinum oxide (PtOx) is decomposed into platinum (Pt) and oxygen gas ($O_2$) in the central portion of the beam spot, with the result that precipitates of platinum (Pt) are dispersed into the bubble pit 23 a. Of the noble metal oxide layer 23, a portion where the bubble pit 23 a is not formed serves as a blank region.

The decomposition of the noble metal oxide layer 23 occurs not in the whole of the beam spot but only in the central portion of the beam spot as described above. Therefore, the formed bubble pit 23a (recording mark) is smaller than the beam spot diameter. Thus, super-resolution recording is attained. The reason why super-resolution recording can be performed thus will be described below.

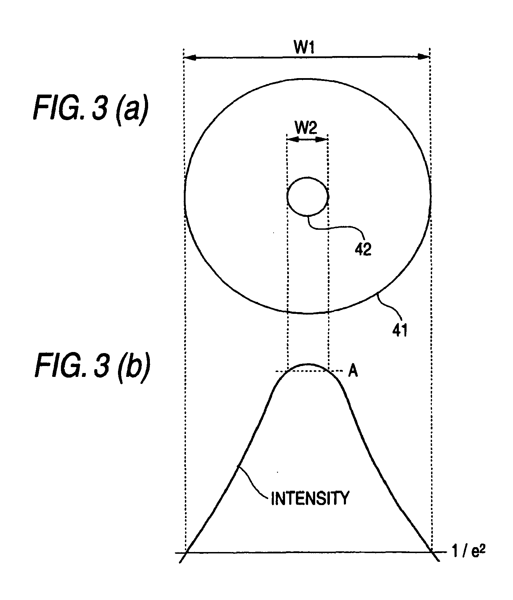

Fig. 3 (a) is a plan view showing a beam spot of the laser beam 40 on the noble metal oxide layer 23, and Fig. 3(b) is a diagram showing the intensity distribution thereof.

As shown in Fig. 3(a), a planar shape of the beam spot 41 is approximately circular, but the intensity distribution of the laser beam 40 in the beam spot 41 is not uniform but has a Gaussian distribution as shown in Fig. 3(b). That is, the energy in the beam spot 41 becomes higher as the distance from the central portion of the beam spot 41 is reduced. Accordingly, when a predetermined threshold value A much larger than maximum intensity $1/e^2$ is set, a diameter W2 of a region 42 in which the intensity is not lower than the threshold value A becomes sufficiently smaller than a diameter W1 of the beam spot 41. This means that the bubble pit 23a (recording mark) is selectively formed in only the portion which is included in the region irradiated with the laser beam 40 and which corresponds to the region 42 in the beams spot 41 when the noble metal oxide layer 23 has a characteristic that the noble metal oxide layer 23 is decomposed when the noble metal oxide layer 23 is irradiated with the laser beam 40 whose intensity is not lower than the threshold value A.

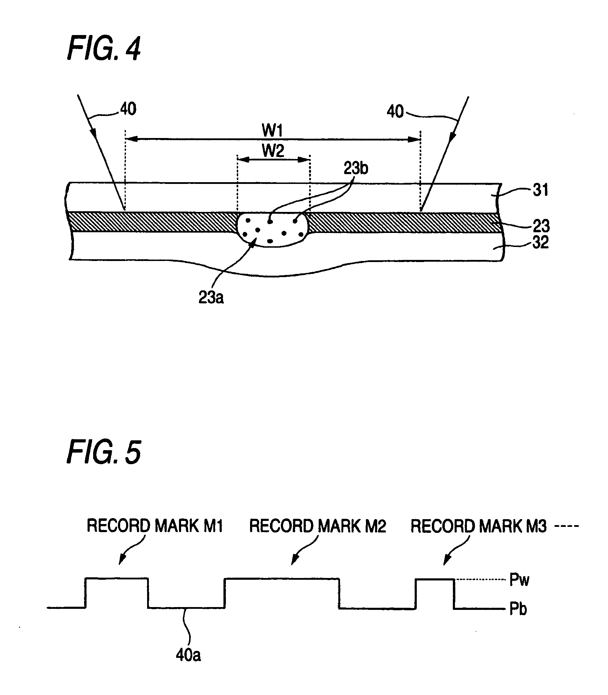

As a result, as shown in Fig. 4, the bubble pit 23a (recording mark) much smaller than the diameter W1 of the beam spot can be formed in the noble metal oxide layer 23. The diameter of the bubble pit 23a is substantially equal to W2. That is, the apparent beam spot diameter W2 and the actual beam spot diameter W1 have a relation of W1>W2. Thus, super-resolution recording is attained. Here, platinum oxide (PtOx) which is the most preferable material as the material of the noble metal oxide layer 23 has a characteristic that it is decomposed when it is heated to 580°C. Accordingly, the intensity with which the noble metal oxide layer 23 will reach 580°C or higher due to irradiation is used as the threshold value A.

Accordingly, when the optical recording medium 10 is irradiated with the intensity-modulated laser beam 40 along the groove 11a and/or the land 11b while being rotated, minute recording marks smaller than a resolution limit can be formed in desired portions of the noble metal oxide layer 23.

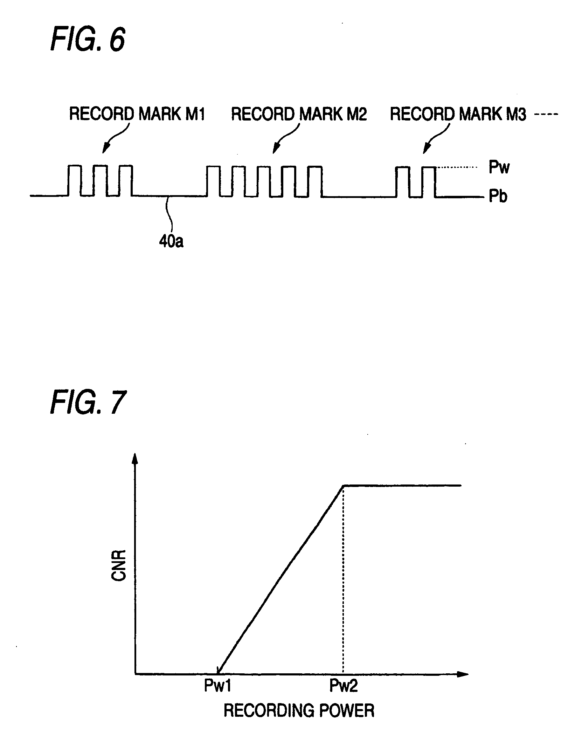

Fig. 5 is a waveform chart showing an example of an intensity-modulation pattern of the laser beam 40 at the time of recording. As shown in Fig. 5, it will go well if intensity 40a of the laser beam 40 at the time of recording is set at recording power (=Pw) in regions where recording marks M1, M2, M3 ... should be formed, and set at base power (=Pb) in regions (blank regions) where no recording mark should be formed. As a result, bubble pits 23a are formed due to decomposition in the regions of the noble metal oxide layer 23 irradiated with the laser beam 40 with the recording power Pw. Thus, the recording marks M1, M2, M3 ... having desired lengths respectively can be formed. The intensity-modulation pattern of the laser beam 40 at the time of recording is not limited to the pattern shown in Fig. 5. For example, as shown in Fig. 6, the recording marks M1, M2, M3 ... may be formed using separated pulse trains.

Fig. 7 is a graph schematically showing the relationship between the recording power of the laser beam 40 and the CNR of a reproduced signal obtained by reproduction performed later.

As shown in Fig. 7, when the recording power of the laser beam 40 is lower than Pw1, an effective reproduced signal cannot be obtained even if the signal is subsequently reproduced from the optical recording medium 10. It can be considered that this is because the noble metal oxide layer 23 is substantially prevented from being decomposed when the recording power of the laser beam 40 is lower than Pw1. When the recording power of the laser beam 40 is in a range not lower than Pw1 and lower than Pw2 (>Pw1), higher CNR can be obtained in subsequent reproduction with the increase of the recording power. It can be considered that this is because, when the recording power of the laser beam 40 is in a range not lower than Pw1 and lower than Pw2, the noble metal oxide layer 23 is partially decomposed so that the decomposed quantity increases with the increase of the recording power. When the recording power of the laser beam 40 is in a range not lower than Pw2, the CNR obtained in subsequent reproduction hardly changes even if the recording power is further increased. It can be considered that this is because the noble metal oxide layer 23 is substantially perfectly decomposed when the recording power of the laser beam 40 is not lower than Pw2. According to the aforementioned consideration, it can be said that it is preferable to set the recording power of the laser beam 40 to be not lower than Pw2.

The value Pw2 depends on the configuration (material of each layer, thickness of each layer, etc.) of the optical recording medium 10 or the recording conditions (linear velocity of recording, wavelength of the laser beam 40, etc.). When the linear velocity of recording is about 6.0 m/s, the wavelength of the laser beam 40 is about 405 nm, and the numerical aperture of the objective lens 50 is about 0.85, the value Pw2 is in a range of $5.0mW \leq Pw2 \leq 9.0mW$ and has a relation to Pw1 of $Pw1 \times 1.4 \leq Pw2 \leq Pw1 \times 2.0$.

In actual setting of the recording power, it is preferable that the recording power is set to be at least 0.3 mW higher than Pw2 in consideration of the variation in manufacturing of the optical recording medium 10, the power fluctuation of the laser beam 40, etc. This is because a sufficient margin with respect to Pw2 should be secured since there will be no great actual damage even if the actual recording power is too high in comparison with Pw2. However, recording power higher than necessary is of no use. It is therefore unnecessary to set the recording power to be higher than Pw2 by 2.0 mW or more. From the above, it can be said that it will go well if the actual recording power is set to be not lower than 5.3 mW (=5.0mW+0.3mW) and not higher than 11.0 mW (=9.0mW+2.0mW).

The method and principle for recording data into the optical recording medium 10 have been described above.

When data recorded thus are reproduced, it will go well if the optical recording medium 10 is rotated while being irradiated along the groove 11a and/or the land 11b with the laser beam 40 with an intensity fixed to a predetermined intensity (reproducing power = Pr). When reflected light obtained thus is photoelectrically converted, an electric signal corresponding to a recording mark train can be obtained. The reason why super-resolution reproduction can be performed thus is not always clear. It is, however, estimated that when the laser beam 40 set with the reproducing power is applied, the laser beam 40 and the metal precipitates 23b existing in the bubble pit 23a produce some interaction, which opens way to super-resolution reproduction.

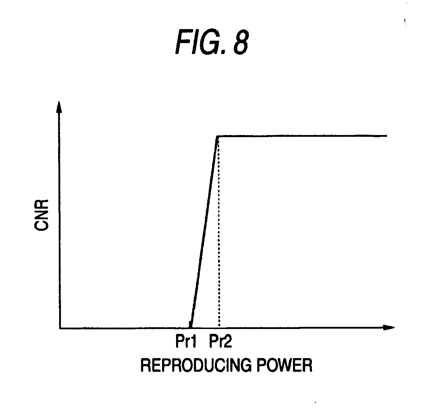

Fig. 8 is a graph schematically showing the relationship between the reproducing power of the laser beam 40 and the CNR.

As shown in Fig. 8, effective reproduced signals can be rarely obtained when the reproducing power of the laser beam 40 is lower than Pr1. When the reproducing power is set to be not lower than Pr1, the CNR is increased suddenly. When the reproducing power is increased to Pr2 (>Pr1), the CNR is saturated. The reason why such a phenomenon occurs is not always clear. It is, however, estimated that interaction between the metal precipitates 23b and the light occurs or becomes conspicuous due to irradiation with the laser beam 40 set to be not lower than Pr1. It is therefore necessary to set the reproducing power of the laser beam 40 to be not lower than Pr1, preferably not lower than Pr2.

However, when the reproducing power is set too high, there is a fear that the noble metal oxide layer 23 may be decomposed in a blank region. Occurrence of such decomposition may lead to large-scale deterioration of reproduction or disappearance of data in some cases. In consideration of this point, it is preferable to set the reproducing power of the laser beam 40 to be not lower than Pr2 and lower than Pw1.

The value Pr2 depends on the configuration (material of each layer, thickness of each layer, etc.) of the optical recording medium 10 or the reproducing conditions (linear velocity of reproducing, wavelength of the laser beam 40, etc.). When the linear velocity of reproducing is about 6.0 m/s, the wavelength of the laser beam 40 is about 405 nm, and the numerical aperture of the objective lens 50 is about 0.85, the value Pr2 is in a range of $1.0mW \leq Pr2 \leq 3.0mW$ and has a relation to Pr1 of $Pr1 \times 1.05 \leq Pr2 \leq Pr1 \times 1.6$.

In actual setting of the reproducing power, it is preferable that the reproducing power is set to be higher than Pr2 by at least 0.1 mW and at most 0.3 mW. This reason is as follows. When the reproducing power exceeds Pr2, improvement in CNR cannot be observed even if the reproducing power is set to be higher than that, while deterioration in reproduction is apt to occur. Therefore, in order to suppress the deterioration in reproduction, the actual reproducing power should be set at intensity slightly higher than Pr2. The power fluctuation of the laser beam 40 in the output range of from 1 mW to 3 mW is usually lower than 0.1 mW. Accordingly, even in consideration of the variation in manufacturing of the optical recording medium 10, it can be considered that it is sufficient to set the reproducing power to be higher than Pr 2 by at least 0.1 mW and at most 0.3 mW. From the above, it can be said that it will go well if the actual reproducing power is set to be not lower than 1.1 mW (=1.0mW+0.1mW) and not higher than 3.3 mW (=3.0mW+0.3mW).

The reproducing power in background-art optical recording media is typically about 0.1 mW to 0.5 mW. The reproducing power is rarely set to be higher than about 0.8 mW even in advanced optical recording media having a two-layer recording surface in its one side. In consideration of this, it is understood that the intensity of the reproducing power in this embodiment is considerably higher than that in the background-art optical recording media.

In addition, in terms of the relation to the actual recording power, it is preferable to set the actual reproducing power as $Pw \times 0.1 \leq Pr \leq Pw \times 0.5$, and it is more preferable to set the actual reproducing power as $Pwx \times 0.1 \leq Pr \leq Pw \times 0.4$. Again from this, it is understood that the intensity of the reproducing power in this embodiment is considerably higher than that in the background-art optical recording media.

It is preferable that the value which should be set actually as the recording power or the reproducing power is saved in the optical recording medium 10 as "setting information". When such setting information is saved in the optical recording medium 10, the setting information can be read by an optical recording/reproducing apparatus when a user records or reproduces data actually. Thus, the recording power or the reproducing power can be determined based on the read setting information.

It is more preferable that the setting information includes not only the recording power or the reproducing power but also information required for specifying various conditions (linear velocity etc.) necessary to record or reproduce data into or from the optical recording medium 10. The setting information may be recorded as wobbles or pre-pits, or may be recorded as data in the noble metal oxide layer 23. In addition, the setting information may be not only information directly indicating various conditions necessary to record or reproduce data, but also information indicating one of various conditions stored in the optical recording/reproducing apparatus in advance, so as to indirectly specify the recording power, the reproducing power, or the like.

Next, description will be made on the optical recording/reproducing apparatus which can record and reproduce data into and from the optical recording medium 10.

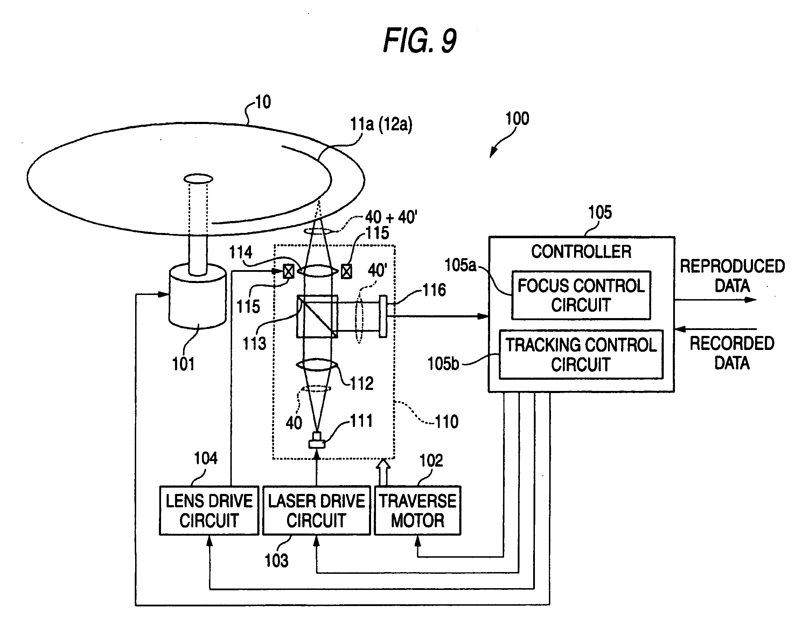

Fig. 9 is a schematic configuration diagram of an optical recording/reproducing apparatus 100 which can record and reproduce data into and from the optical recording medium 10.

As shown in Fig. 9, the optical recording/reproducing apparatus 100 has a spindle motor 101 for rotating the optical recording medium 10, an optical head 110 for irradiating the optical recording medium 10 with the laser beam 40 and receiving reflected light 40' therefrom, a traverse motor 102 for moving the optical head 110 in the radial direction of the optical recording medium 10, a laser drive circuit 103 for supplying a laser drive signal 103a to the optical head 110, a lens drive circuit 104 for supplying a lens drive signal 104a to the optical head 110, and a controller 105 for controlling the spindle motor 101, the traverse motor 102, the laser drive circuit 103 and the lens drive circuit 104.

The optical head 110 has a laser light source 111 for generating the laser beam 40 based on the laser drive signal 103a, a collimator lens 112 for converting the laser beam 40 generated from the laser light source 111 into parallel rays, a beam splitter 113 disposed on luminous flux, an objective lens 114 for focusing the laser beam 40, an actuator 115 for moving the objective lens 114 vertically and horizontally based on the lens drive signal 104a, and a photo-detector 116 for receiving the reflected light 40' and converting the reflected light 40' photoelectrically.

The spindle motor 101 can rotate the optical recording medium 10 at a desired rotation number under the control of the controller 105. Methods for controlling the rotation of the optical recording medium 10 can be roughly classified into a method (CLV system) for rotating the optical recording medium 10 with the linear velocity kept constant, and a method (CAV system) for rotating the optical recording medium 10 with the angular velocity kept constant. According to rotation control using the CLV system, the data transfer rate is fixed whether the recording/reproducing position is an inside portion or an outside portion of the optical recording medium 10. It is therefore possible to always perform recording/reproducing at a high data transfer rate, and the recording density is high. While there are such advantages, control of the spindle motor 101 becomes complicated because the rotational velocity of the optical recording medium 10 has to be changed in accordance with the recording/reproducing position. Thus, there is a disadvantage that the random access rate is low. On the other hand, according to rotation control using the CAV system, it is so easy to control the spindle motor 101 that the random access rate is high. While there is such an advantage, there is a disadvantage that the recording density in the periphery becomes slightly low. Most of recording/reproducing systems of optical recording media put into practice presently adopt the CLV system. This attributes attention to the advantage that a high recording density can be obtained while the data transfer rate can be made best use of.

The traverse motor 102 serves to move the optical head 110 in the radial direction of the optical recording medium 10 under the control of the controller 105. At the time of recording or reproducing data, the traverse motor 102 drives the optical head 110 so that the beam spot of the laser beam 40 moves gradually from the inside to the outside or from the outside to the inside over the optical recording medium 10 along the groove 11a and/or the land 11b spirally provided in the optical recording medium 10. Also when the data recording position or the data reproducing position is changed, the controller 105 controls the traverse motor 102 so as to move the beam spot of the laser beam L to a desired position on the optical recording medium 10.

The laser drive circuit 103 serves to supply the laser drive signal 103a to the laser light source 111 in the optical head 110 under the control of the controller 105 so that the intensity of the laser beam 40 generated corresponds to the intensity of the laser drive signal 103a. Accordingly, when data are recorded into the optical recording medium 10, the laser drive circuit 103 modulates the intensity of the laser drive signal 103 a so as to form the waveform of the laser beam 40 into a waveform shown in Fig. 5 or Fig. 6. On the other hand, when data are reproduced from the optical recording medium 10, the laser drive circuit 103 fixes the intensity of the laser drive signal 103 a to predetermined intensity (Pr).

The lens drive circuit 104 serves to supply the lens drive signal 104a to the actuator 115 under the control of the controller 105. As a result, the beam spot of the laser beam 40 can be focused accurately on the noble metal oxide layer 32 of the optical recording medium 10, while the beam spot of the laser beam 40 can follow the eccentric groove 11a and/or the eccentric land 11b. That is, the controller 105 is provided with a focus control circuit 105a. When this focus control circuit 105a is brought into a focus-on state, the beam spot of the laser beam 40 is fixed into the state where the beam spot is focused on the noble metal oxide layer 32 of the optical recording medium 10. Further, the controller 105 is provided with a tracking control circuit 105b. When this tracking control circuit 105b is brought into a tracking-on state, the beam spot of the laser beam 40 is put into a state where the beam spot can automatically follow the groove 11a and/or the land 11b of the optical recording medium 10.

When the optical recording medium 10 is irradiated with the laser beam 40 by use of the optical recording/reproducing apparatus 100 configured thus, the controller 105 controls the laser drive circuit 103. Based on this control, the laser drive circuit 103 supplies the laser drive signal 103a to the laser light source 111. Based on this laser drive signal 103a, the laser light source 111 generates the laser beam 40. This laser beam 40 is converted into parallel rays by the collimator lens 112. After that, the laser beam 40 is incident on the objective lens 114 via the beam splitter 113. Thus, the laser beam 40 is focused on the groove 11a and/or the land 11b belonging to the optical recording medium 10.

The reflected light 40' of the laser beam 40 applied to the optical recording medium 10 is converted into parallel rays by the objective lens 114. After that, the reflected light 40' is reflected by the beam splitter 113, and incident on the photo-detector 116. Thus, the reflected light 40' is photoelectrically converted by the photo-detector 116, and supplied to the controller 105.

When data are recorded or reproduced into or from the optical recording medium 10 by use of the optical recording/reproducing apparatus 100 configured thus, the setting information recorded in the optical recording medium 10 is read out, and data are recorded or reproduced in conditions based on the read setting information under the control of the controller 105, as described previously. That is, when data are recorded, the recording power of the laser beam 40 can be set at a predetermined value (preferably not lower than 4.3 mW and not higher than 9.0 mW) not lower than Pw2. When data are reproduced, the reproducing power of the laser beam 40 can be set at a predetermined value (preferably not lower than 1.1 mW and not higher than 3.3 mW) not lower than Pr2. Consequently, recording can be performed with optimum recording power, while reproducing can be performed with optimum reproducing power.

The optical recording/reproducing apparatus 100 described above can perform both the data recording and the data reproducing on the optical recording medium 10. However, data may be recorded into the optical recording medium 10 by use of an optical recording apparatus which can only records data, or data may be reproduced from the optical recording medium 10 by use of an optical reproducing apparatus which can only reproduce data.

The present invention is not limited to the embodiment described above. Various modifications can be made within the range of the invention stated in its claims. Not to say, those modifications are also included in the scope of the present invention.

For example, the structure of the optical recording medium 10 shown in Fig. 1 is only a basic structure of an optical recording medium according to the present invention. The structure of the optical recording medium according to the present invention is not limited to this structure. For example, another noble metal oxide layer may be added to the substrate 11 side in view from the light absorbing layer 22, or another light absorbing layer may be added to the optically transparent layer 12 side in view from the noble metal oxide layer 23.

Further, various functional layers such as the light absorbing layer 22, the noble metal oxide layer 23, etc. may be provided on each of the opposite sides of the substrate 11 so as to form a structure having recording surfaces in the opposite sides. Two or more various functional layers may be laminated on one of the surfaces of the substrate 11 through a transparent intermediate layer so as to form a structure having two or more recording surfaces on one side.

[Example]

An example of the present invention will be described below. However, the present invention is not limited to this example at all.

[Production of Sample]

An optical recording medium sample having a structure in which the reflecting layer 21 was removed from the optical recording medium 10 shown in Fig. 1 was produced in the following method.

First, a disc-like substrate 11 made of polycarbonate and having a groove 11a and a land 11b formed on the surface was produced by an injection molding method to measure about 1.1 mm in thickness and about 120 mm in diameter.

Next, this substrate 11 was set in a sputtering apparatus. A dielectric layer 33 substantially made of a mixture of ZnS and $SiO_2$ (mol ratio = about 80:20) and having a thickness of about 80 nm, a light absorbing layer 22 substantially made of $Ag_aIn_bSb_cTe_d$ (a=5.9, b=4.4, c=61.1, d=28.6) and having a thickness of about 60 nm, a dielectric layer 32 substantially made of a mixture of ZnS and $SiO_2$ (mol ratio = about 80:20) and having a thickness of about 40 nm, a noble metal oxide layer 23 substantially made of platinum oxide (PtOx) and having a thickness of about 4 nm, and a dielectric layer 31 substantially made of a mixture of ZnS and $SiO_2$ (mol ratio = about 80:20) and having a thickness of about 100 nm were formed sequentially by a sputtering method on the surface where the groove 11a and the land 11b were formed.

Here, when the noble metal oxide layer 23 was formed, platinum (Pt) was used as a target, oxygen gas ($O_2$) and argon gas (Ar) were used as sputtering gases (flow rate ratio = 1:3), the pressure in a chamber was set at 0.14 Pa, and the sputtering power was set at 200 W. As a result, the mortality factor (k) of platinum oxide (PtOx) formed thus was about 1.96.

The dielectric layer 31 was coated with acrylic-based ultraviolet-curing resin by a spin coat method. This was irradiated with ultraviolet rays so that an optically transparent layer 12 about 100 $\mu$m thick was formed. Thus, an optical recording medium sample was formed.

[Evaluation 1 of Characteristic]

First, the aforementioned optical recording medium sample was set in an optical disk tester (DDU1000 made by Pulstec Industrial Co., Ltd). While the optical recording medium sample was rotated at a linear velocity of about 6.0 m/s, the noble metal oxide layer 23 was irradiated from the light entrance surface 12a with a laser beam with a wavelength of about 405 nm through an objective lens with a numerical aperture of about 0.85. Thus, a single frequency signal in which the recording mark length and the blank length were 80 nm was recorded. Incidentally, when the aforementioned optical system was used, a resolution limit given by $d_2=\lambda/4NA$ was about 120 nm.

The recording power (Pw) of the laser beam 40 at the time of recording was set at various values ranging from 3.5 mW to 7.5 mW, while the base power (Pb) was set to be substantially 0 mW. In addition, the pattern shown in Fig. 5 was used as the pulse pattern of the laser beam 40.

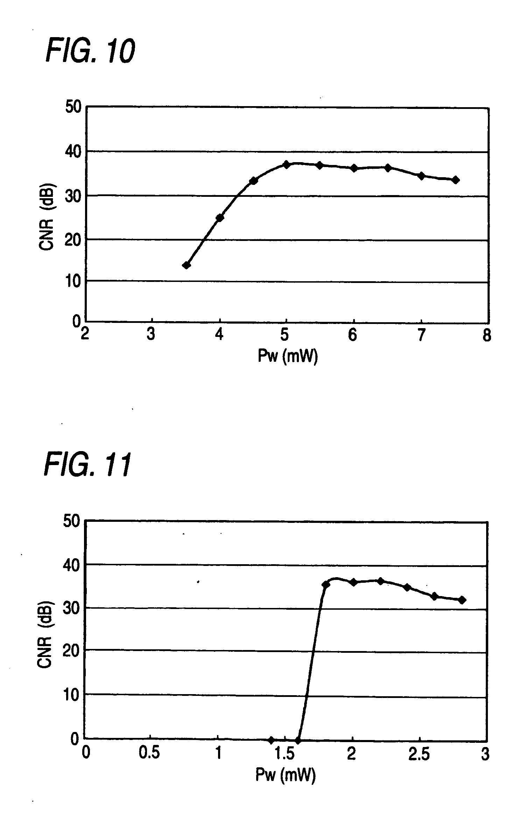

The recorded single frequency signal was reproduced, and the CNR thereof was measured. The reproducing power (Pr) of the laser beam 40 was set at 2.0 mW. The measuring result is shown in Fig. 10.

As shown in Fig. 10, the CNR was high in connection with the recording power in the range where the recording power was lower than 5.0 mW. In the range where the recording power was not lower than 5.0 mW, the CNR was saturated and no more improvement was observed. That is, in the optical recording medium sample in this example, Pw2=5.0mW.

[Evaluation 2 of Characteristic]

Next, of the single frequency signals recorded in the optical recording medium sample in "Evaluation 1 of Characteristic", the single frequency signal recorded with the recording power set at 5.5 mW was reproduced with various reproducing powers, and the CNR thereof was measured. The measuring result is shown in Fig. 11.

As shown in Fig. 11, the CNR was substantially zero in the range where the reproducing power was lower than 1.8 mW. However, when the reproducing power reached 1.8 mW or higher, the CNR increased suddenly. That is, in the optical recording medium sample in this example, Pr2=1.8mW.

<Industrial Applicability>

As described above, according to the present invention, super-resolution recording and super-resolution reproducing can be performed with $\lambda$/NA set to be not lower than 640 nm by use of a laser beam with a wavelength shorter than about 635 nm and an objective lens with a numerical aperture higher than about 0.6. Good characteristics can be obtained particularly in super-resolution recording and super-resolution reproducing using a laser beam with a wavelength of about 405 nm and an objective lens with a numerical aperture of about 0.85, which are used for advanced optical recording media. Accordingly, a recording/reproducing apparatus similar to a recording/reproducing apparatus for the advanced optical recording media can be used. It is therefore possible to suppress the development cost and the manufacturing cost of the recording/reproducing apparatus.

In addition, according to the present invention, the recording power or the reproducing power of the laser beam at the time of recording data or at the time of reproducing data is set to a properintensity. Accordingly, good signal characteristics can be obtained.

**Claims**

1. An optical recording medium comprising:

    a substrate;
    an optically transparent layer;
    a first dielectric layer;
    a noble metal oxide layer;
    a second dielectric layer;
    a light absorbing layer; and
    a third dielectric layer,
    said first dielectric layer, said noble metal oxide layer, said second dielectric layer, said light absorbing layer and said third dielectric layer being disposed between said optically transparent layer and said substrate in this order in view from said optically transparent layer,
    wherein setting is done so that $\lambda$/NA is not longer than 640 nm when $\lambda$ designates a wavelength of a laser beam and NA designates a numerical aperture of an objective lens for focusing said laser beam, and setting is done as:

$$Pw \times 0.1 \leq Pr \leq Pw \times 0.5$$

    when Pw designates recording power of said laser beam and Pr designates reproducing power of said laser beam, while said optical recording medium includes setting information required for recording a recording mark train including recording marks each having a length not larger than $\lambda$/4NA and for reproducing data from said recording mark train.

2. An optical recording medium comprising:

    a substrate;
    an optically transparent layer;
    a first dielectric layer;
    a noble metal oxide layer;
    a second dielectric layer;
    a light absorbing layer; and
    a third dielectric layer,
    said first dielectric layer, said noble metal oxide layer, said second dielectric layer, said light absorbing layer and said third dielectric layer being disposed between said optically transparent layer and said substrate in this order in view from said optically transparent layer,
    wherein setting is done so that $\lambda$/NA is not longer than 640 nm and recording power of a laser beam is not lower than 5.3 mW and not higher than 11.0 mW when $\lambda$ designates a wavelength of said laser beam and NA designates a numerical aperture of an objective lens for focusing said laser beam, while said optical recording medium includes setting information required for recording a recording mark train including recording marks each having a length not larger than $\lambda$/4NA.

3. An optical recording medium comprising:

    a substrate;
    an optically transparent layer;
    a first dielectric layer;
    a noble metal oxide layer;
    a second dielectric layer;

a light absorbing layer; and
a third dielectric layer,
said first dielectric layer, said noble metal oxide layer, said second dielectric layer, said light absorbing layer and said third dielectric layer being disposed between said optically transparent layer and said substrate in this order in view from said optically transparent layer,
wherein setting is done so that $\lambda$/NA is not longer than 640 nm and reproducing power of a laser beam is not lower than 1.1 mW and not higher than 3.3 mW when $\lambda$ designates a wavelength of said laser beam and NA designates a numerical aperture of an objective lens for focusing said laser beam, while said optical recording medium includes setting information required for reproducing data from a recording mark train including recording marks each having a length not larger than $\lambda$/4NA.

4. An optical recording medium according to any one of Claims 1 through 3, **characterized in that** said substrate is not thinner than 0.6 mm and not thicker than 2.0 mm, said optically transparent layer is not thinner than 10 $\mu$m and not thicker than 200 $\mu$m, said noble metal oxide layer is not thinner than 2 nm and not thicker than 50 nm, said second dielectric layer is not thinner than 5 nm and not thicker than 100 nm, said light absorbing layer is not thinner than 5 nm and not thicker than 100 nm, and said third dielectric layer is not thinner than 10 nm and not thicker than 140 nm.

5. An optical recording medium according to any one of Claims 1 through 4, **characterized in that** platinum oxide (PtOx) is included in said noble metal oxide layer.

6. An optical recording medium according to any one of Claims 1 through 5, **characterized by** further comprising a reflecting layer provided between said substrate and said third dielectric layer.

7. An optical recording/reproducing apparatus for recording and reproducing data into and from an optical recording medium by irradiating said optical recording medium with a laser beam from an optically transparent layer side, said optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said optical recording/reproducing apparatus being **characterized in that**: setting is done so that $\lambda$/NA is not longer than 640 nm when $\lambda$ designates a wavelength of said laser beam and NA designates a numerical aperture of an objective lens for focusing said laser beam, and setting is done as Pw$\times$0.1$\leq$Pr$\leq$Pw$\times$0.5 when Pw designates recording power of said laser beam and Pr designates reproducing power of said laser beam, while said optical recording/reproducing apparatus records a recording mark train including recording marks each having a length not larger than $\lambda$/4NA and reproduces data from said recording mark train.

8. An optical recording apparatus for recording data into an optical recording medium by irradiating said optical recording medium with a laser beam from an optically transparent layer side, said optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said optical recording apparatus being **characterized in that**: setting is done so that $\lambda$/NA is not longer than 640 nm and recording power of said laser beam is not lower than 5.3 mW and not higher than 11.0 mW when $\lambda$ designates a wavelength of said laser beam and NA designates a numerical aperture of an objective lens for focusing said laser beam, while said optical recording apparatus records a recording mark train including recording marks each having a length not larger than $\lambda$/4NA.

9. An optical reproducing apparatus for reproducing data from an optical recording medium by irradiating said optical recording medium with a laser beam from an optically transparent layer side, said optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said optical reproducing apparatus being **characterized in that**: setting is done so that $\lambda$/NA is not longer than 640 nm and reproducing power of said laser beam is not lower than 1.1 mW and not higher than 3.3 mW when $\lambda$ designates a wavelength of said laser beam and NA designates a numerical aperture of an objective lens for focusing said laser beam, while said optical reproducing apparatus reproduces data from a recording mark train including recording marks each having a length not larger than λ/4NA.

10. A data recording/reproducing method for recording and reproducing data into and from an optical recording medium by irradiating said optical recording medium with a laser beam from an optically transparent layer side, said optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said data recording/reproducing method being **characterized in that**: setting is done so that λ/NA is not longer than 640 nm when λ designates a wavelength of said laser beam and NA designates a numerical aperture of an objective lens for focusing said laser beam, and setting is done as Pw×0.1≤Pr≤Pw×0.5 when Pw designates recording power of said laser beam and Pr designates reproducing power of said laser beam, while said data recording/reproducing method records a recording mark train including recording marks each having a length not larger than λ/4NA and reproduces data from said recording mark train.

11. A data recording method for recording data into an optical recording medium by irradiating said optical recording medium with a laser beam from an optically transparent layer side, the optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said data recording method being **characterized in that**: setting is done so that λ/NA is not longer than 640 nm and a value of recording power of said laser beam is not lower than 5.3 mW and not higher than 11.0 mW when λ designates a wavelength of said laser beam and NA designates a numerical aperture of an objective lens for focusing said laser beam, while said data recording method records a recording mark train including recording marks each having a length not larger than λ/4NA.

12. A data recording method according to Claim 11, **characterized in that** said value of said recording power is set to be at least 0.5 mW and at most 2.0 mW higher than a value of recording power with which a carrier/noise ratio will be substantially saturated.

13. A data reproducing method for reproducing data from an optical recording medium by irradiating said optical recording medium with a laser beam from an optically transparent layer side, said optical recording medium having a substrate, an optically transparent layer, a first dielectric layer, a noble metal oxide layer, a second dielectric layer, a light absorbing layer and a third dielectric layer, said first dielectric layer, said noble metal oxide layer, said second dielectric layer, said light absorbing layer and said third dielectric layer being disposed between said optically transparent layer and said substrate in this order in view from said optically transparent layer, said data reproducing method being **characterized in that**: setting is done so that λ/NA is not longer than 640 nm and a value of reproducing power of said laser beam is not lower than 1.1 mW and not higher than 3.3 mW when λ designates a wavelength of said laser beam and NA designates a numerical aperture of an objective lens for focusing said laser beam, while said data reproducing method reproduces data from a recording mark train including recording marks each having a length not larger than λ/4NA.

14. A data reproducing method according to Claim 13, **characterized in that** said value of said reproducing power is set to be at least 0.1 mW and at most 0.3 mW higher than a value of reproducing power with which a carrier/noise ratio will be substantially saturated.

## FIG. 1 (a)

## FIG. 1 (b)

# FIG. 2

FIG. 3 (a)

W1

W2

42

41

FIG. 3 (b)

A

INTENSITY

1 / e²

## FIG. 4

## FIG. 5

RECORD MARK M1    RECORD MARK M2    RECORD MARK M3 ----

## FIG. 6

RECORD MARK M1    RECORD MARK M2    RECORD MARK M3 ----

Pw

Pb

40a

## FIG. 7

CNR

Pw1        Pw2

RECORDING POWER

# FIG. 8

Pr1  Pr2

REPRODUCING POWER

# FIG. 9

EP 1 640 977 A1

## FIG. 10

## FIG. 11

## INTERNATIONAL SEARCH REPORT

| International application No. |
|---|
| PCT/JP2004/009502 |

**A. CLASSIFICATION OF SUBJECT MATTER**
Int.Cl$^7$ G11B7/0045, 7/005, 7/125, 7/24

According to International Patent Classification (IPC) or to both national classification and IPC

**B. FIELDS SEARCHED**

Minimum documentation searched (classification system followed by classification symbols)
Int.Cl$^7$ G11B7/00-7/013, 7/24, B41M5/26

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br>P,A | JP 2004-087073 A (TDK Corp.),<br>18 March, 2004 (18.03.04),<br>Full text<br>(Family: none) | 1,2,4-8,<br>10-12<br>3,9,13,14 |
| P,A | JP 2004-111004 A (National Institute of<br>Advanced Industrial Science and Technology),<br>08 April, 2004 (08.04.04),<br>Full text<br>(Family: none) | 1-14 |
| P,A | JP 2004-039177 A (National Institute of<br>Advanced Industrial Science and Technology),<br>05 February, 2004 (05.02.04),<br>Full text<br>(Family: none) | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 October, 2004 (14.10.04) | Date of mailing of the international search report<br>02 November, 2004 (02.11.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/009502

C (Continuation).    DOCUMENTS CONSIDERED TO BE RELEVANT

| Category* | Citation of document, with indication, where appropriate, of the relevant passages | Relevant to claim No. |
|---|---|---|
| P,A | JP 2004-030891 A (Raitoku Kagi Kofun Yugen Koshi), 29 January, 2004 (29.01.04), Full text & US 2003/228462 A1 | 1-14 |
| P,A | JP 2004-020822 A (National Institute of Advanced Industrial Science and Technology), 22 January, 2004 (22.01.04), Full text (Family: none) | 1-14 |
| P,A | JP 2004-158134 A (Ricoh Co., Ltd.), 03 June, 2004 (03.06.04), Full text (Family: none) | 1-14 |
| A | JP 6-262854 A (Konica Corp.), 20 September, 1994 (20.09.94), Full text (Family: none) | 1-14 |

Form PCT/ISA/210 (continuation of second sheet) (January 2004)